# EUROPEAN PATENT APPLICATION

(11) **EP 4 524 001 A1**
(43) Date of publication of application: **19.03.2025**
(21) Application number: 24192748.2
(22) Date of filing: 03.08.2024
(51) Int. Cl.: B62D 25/08

(54) **VEHICLE STRUCTURE**

(30) Priority: 15.09.2023 JP 2023150384
(71) Applicant: Suzuki Motor Corporation, Shizuoka 432-8611 (JP)
(72) Inventor: TAKANO, Yuji, HAMAMATSU-SHI, 432-8611 (JP); KAGEYAMA, Yoshitatsu, HAMAMATSU-SHI, 431-0201 (JP)
(74) Representative: Plasseraud IP

(57) **Abstract**

[Problem to be Solved]

To efficiently absorb impact energy.

[Solution]

A vehicle structure 1 comprises: a reinforcing member 20 supported by a first vehicle body structural member 31 and a second vehicle body structural member 32 separated from each other in a vehicle up-down direction in a front part or a rear part of a vehicle; and a sensor apparatus S attached to the reinforcing member 20. A difference in rigidity with respect to the vehicle up-down direction is imparted to the reinforcing member 20 of the vehicle structure 1.

## Description

### [Technical Field]

The present disclosure relates to a vehicle structure including a structure for arranging a sensor apparatus in a front part or a rear part of a vehicle.

### [Background Art]

In general, a front part or a rear part of a vehicle such as an automobile is provided with an outer panel such as a bumper or a grille constituting a design surface on the outer side of the vehicle, and a sensor apparatus which senses an exterior environment of the vehicle by using a camera, a radar, an ultrasonic wave, or the like may be arranged on the back surface side of the outer panel.

As an example of a vehicle structure having a structure for arranging a sensor apparatus in a front part or a rear part of a vehicle, a structure disclosed in Patent Literature 1 is known. The structure disclosed in Patent Literature 1 includes a bridging member which connects, in an up-down direction, a bumper beam and an upper bar arranged at varying heights in a front part of a vehicle, a first bracket fixed to a radar apparatus, and a second bracket which has an arm part connecting the first bracket and the bridging member and fixes the first bracket to the bridging member. Furthermore, in the structure disclosed in Patent Literature 1, when receiving external force, the arm part undergoes buckling deformation, thereby alleviating an impact due to the external force.

### [Citation List]

### [Patent Literature]

[Patent Literature 1] WO 2020/162201 A

### [Summary of Invention]

### [Problem to be Solved by the Invention]

However, in the structure of Patent Literature 1, the impact is alleviated by local deformation of a leg part of the second bracket fixed to the bridging member connecting the bumper beam and the upper bar constituting a vehicle body structural member of the vehicle, and there is a possibility that impact energy cannot be fully converted to deformation energy, and the impact cannot be sufficiently absorbed.

Thus, the purpose of the present disclosure is to provide a vehicle structure having a structure capable of efficiently absorbing impact energy.

### [Means for Solving the Problem]

In order to achieve the above-described purpose, one aspect of the present disclosure provides a vehicle structure comprising: a reinforcing member supported by a first vehicle body structural member and a second vehicle body structural member separated from each other in a vehicle up-down direction in a front part or a rear part of a vehicle; and a sensor apparatus attached to the reinforcing member, characterized in that a difference in rigidity with respect to the vehicle up-down direction is imparted to the reinforcing member.

### [Advantageous Effect of Invention]

According to the one aspect of the present disclosure, a vehicle structure having a structure capable of efficiently absorbing impact energy can be provided.

### [Brief Description of Drawings]

[Figure 1] Figure 1 is a perspective view of a vehicle structure according to an embodiment of the present disclosure.
[Figure 2] Figure 2 is a front view of a reinforcing member of the vehicle structure.
[Figure 3] Figure 3 is an enlarged plan view of a lower part of the reinforcing member seen from the rear of the vehicle.
[Figure 4] Figure 4 is an enlarged perspective view of the lower part of the reinforcing member to which a sensor apparatus is attached.
[Figure 5] Figure 5 is an enlarged rear view of the lower part of the reinforcing member to which the sensor apparatus is attached.
[Figure 6] Figure 6 is a partial lateral view of the reinforcing member seen from the first lateral part side.
[Figure 7] Figure 7 is a partial lateral view of the reinforcing member seen from the second lateral part side.
[Figure 8] Figure 8 is a perspective view of the reinforcing member according to a modification.

### [Mode for Carrying Out the Invention]

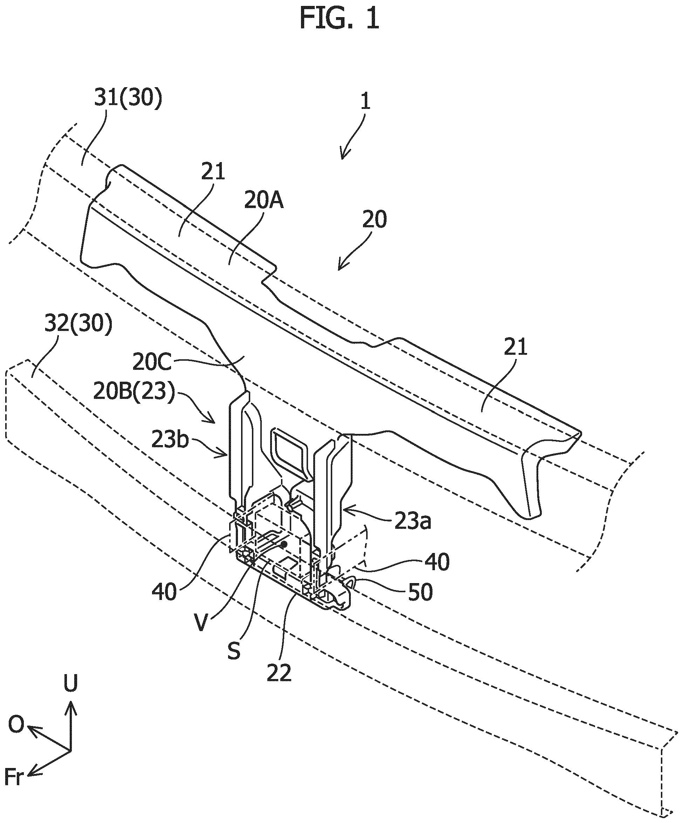

Hereinafter, embodiments of the present disclosure will be described by referring to the attached drawings. Figure 1 is a perspective view of the vehicle structure 1 seen from the front of the vehicle according to an embodiment of the present disclosure. Note that, in the drawings, an arrow Fr direction represents the front of the vehicle in a vehicle front-rear direction, an arrow O direction represents the outside of the vehicle in a vehicle width direction (the outer side in the vehicle width direction), and an arrow U direction represents the upside of the vehicle in a vehicle up-down direction. In the following descriptions, "front" and "rear" correspond to front and rear in the vehicle front-rear direction, and "up" and "down" correspond to up and down in the vehicle up-down direction. In addition, "left" and "right" correspond to left and right in the vehicle width direction when seen from the front side of the vehicle toward the rear side of the vehicle.

### (Overview of Vehicle Structure)

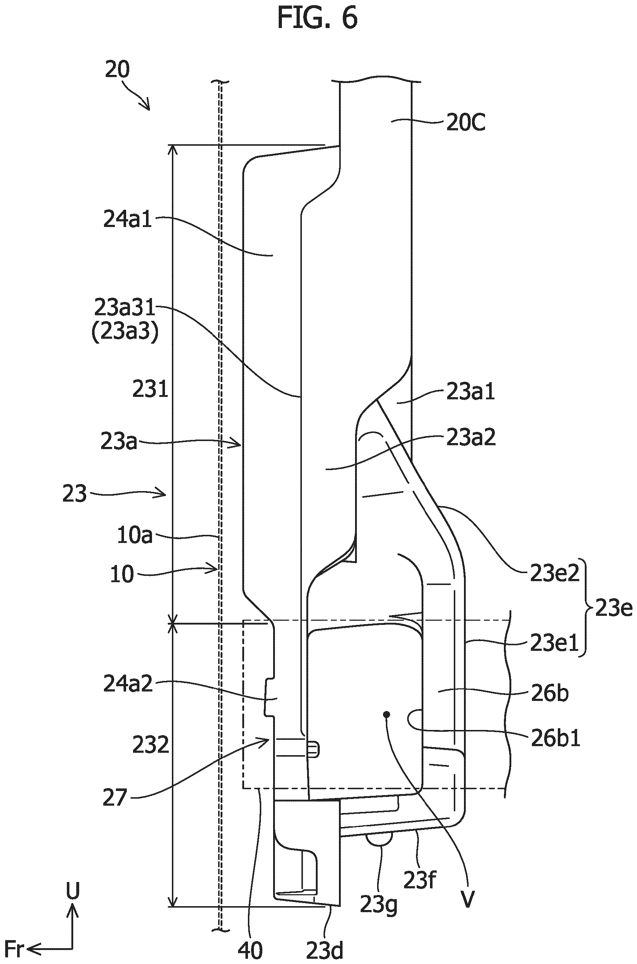

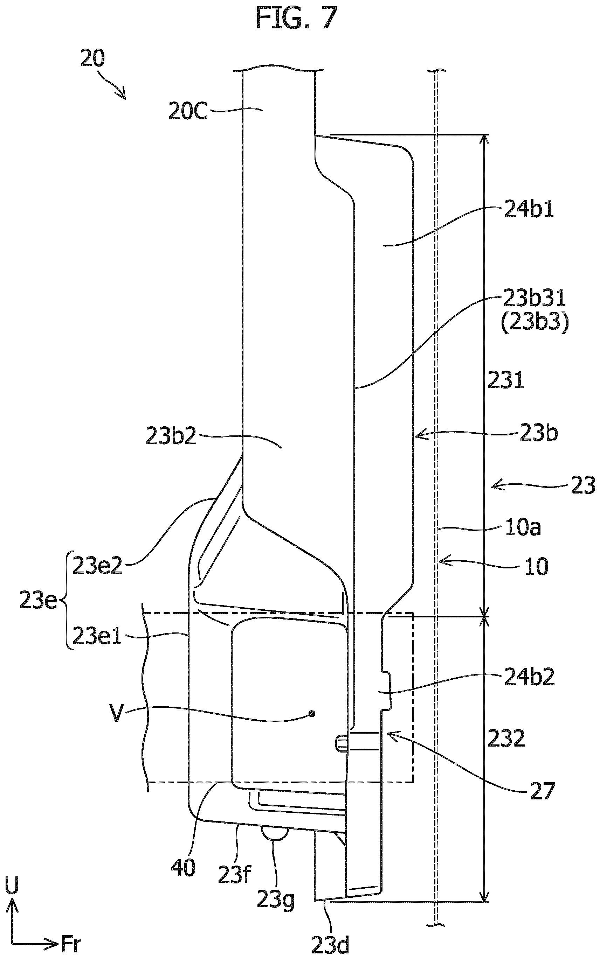

The vehicle structure 1 includes a structure for arranging, on the back surface side of an outer panel 10 (refer to Figure 6 and Figure 7 described later) of a vehicle, a sensor apparatus S which senses (detects) an exterior environment of the vehicle. In the present embodiment, the vehicle structure 1 also includes a structure for reinforcing the outer panel 10 and attaching (fixing) the outer panel 10 to the vehicle body side. In the present embodiment, the vehicle structure 1 is applied as a front part structure of the vehicle.

When referring to Figure 1, and Figure 6 and Figure 7 described later, in the present embodiment, the vehicle structure 1 includes the outer panel 10, a reinforcing member 20, the sensor apparatus S, and a vehicle body structural member 30. Note that the outer panel 10 is removed in Figure 1, and is illustrated with a broken line in Figure 6 and Figure 7 described later. Note that, in Figure 1, an outer shape of the sensor apparatus S and an outer shape of the vehicle body structural member 30 are illustrated with broken lines, and an outer shape of an impact absorbing member 40 described later is illustrated with a dash-double-dot line.

The outer panel 10 is a member constituting a design surface of the outer side of the vehicle, which extends in the vehicle width direction. In the present embodiment, the outer panel 10 is a front bumper constituting the design surface of the outer side in a front part of the vehicle. The outer panel 10, which is the front bumper, has a bumper front surface part 10a extending in the whole vehicle width direction, for example. Although not illustrated, a front grille made of resin is provided at the center of the bumper front surface part 10a, and a plurality of vent holes are open in the front grille. That is to say, the outer panel 10 has the front grille which is an air intake member. Note that, although not illustrated, in the present embodiment, a radiator is arranged at the rear of the reinforcing member 20, and an air guiding member such as a shroud which retains the radiator and forms an intake path is arranged between the radiator and the reinforcing member 20. Air passing the plurality of vent holes of the front grille is guided to the radiator through the air guiding member.

The reinforcing member 20 is a member for reinforcing the outer panel 10 from its back surface side, and fixing the outer panel 10 to a vehicle body (the vehicle body structural member 30). The reinforcing member 20 generally extends in the vehicle up-down direction, along a central part in the vehicle width direction on the back surface of the outer panel 10. Since the outer panel 10 is a large panel that is thin and spreading in a wide range in the vehicle width direction, its rigidity is relatively low. The reinforcing member 20 supports the outer panel 10 at a plurality of locations (places) from the back surface of the outer panel 10 to reinforce the outer panel 10 of a low rigidity. As will be described later, the reinforcing member 20 is coupled to (is fixed to) the vehicle body (vehicle body structural member 30) at a plurality of locations, and is supported by the vehicle body structural member 30 (in detail, a first vehicle body structural member 31 and a second vehicle body structural member 32 described later). The reinforcing member 20 is coupled to (is fixed to) the back surface of the outer panel 10 at a plurality of locations, thereby supporting the outer panel 10 from the back surface side. Note that the structure of the reinforcing member 20 will be described later.

The sensor apparatus S is attached to the reinforcing member 20. The sensor apparatus S is an apparatus that is attached to the reinforcing member 20 and senses the exterior environment of the vehicle. In the present embodiment, the sensor apparatus S is an apparatus that is configured to sense an obstacle (obstacle in the exterior of the vehicle) such as another vehicle positioned at the front of the vehicle by using an electromagnetic wave. In the present embodiment, the sensor apparatus S uses a millimeter wave as the electromagnetic wave. That is to say, the sensor apparatus S is a millimeter wave radar. However, the electromagnetic wave used in the sensor apparatus S is not limited to the millimeter wave, and it may be a microwave, for example.

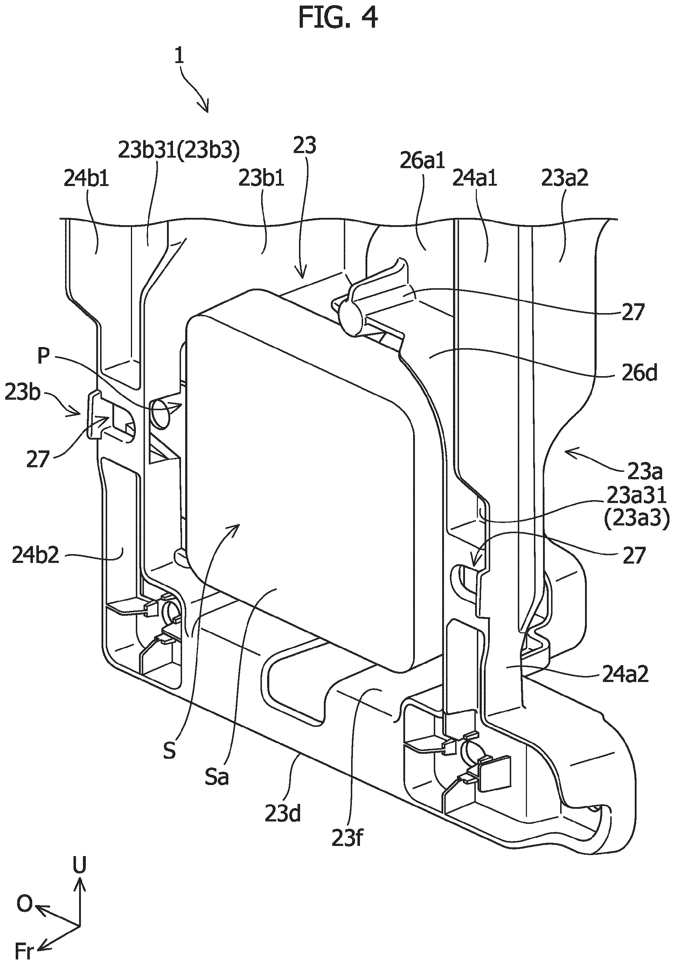

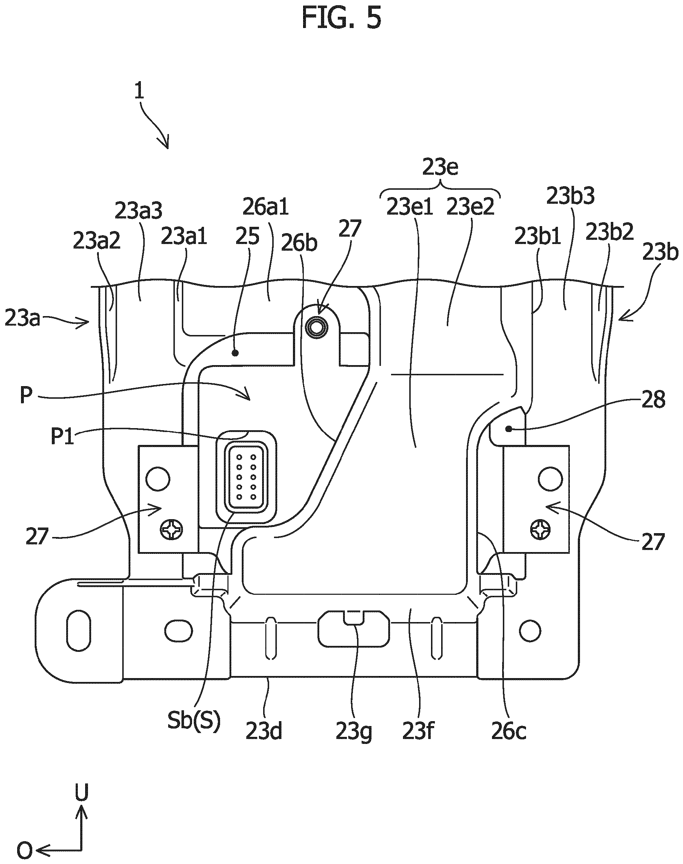

The sensor apparatus S has a sensor outer surface Sa facing the outer side of the vehicle (here, the front of the vehicle) with respect to the vehicle front-rear direction, and an electromagnetic wave is output from or input to the sensor outer surface Sa. The sensor apparatus S is attached, in the rear of the front grille of the outer panel 10, at generally a central lower part in the vehicle width direction of the reinforcing member 20 in a posture in which the sensor outer surface Sa is made to face the front of the vehicle, through a coupling tool such as a sensor support plate P (refer to Figure 4 and Figure 5 described later) or a bolt, and is fixed to the reinforcing member 20. In this state, the sensor apparatus S opposes the back surface of the outer panel 10. A region (portion) opposing the sensor apparatus S in the outer panel 10 is made of a material (for example, synthetic resin or the like) having a characteristic allowing transmission of an electromagnetic wave, and is formed in a flat tabular shape as a sensing (detection) wave passing region (electromagnetic wave passing part).

The sensor apparatus S outputs an electromagnetic wave, and the output electromagnetic wave passes the sensing wave passing region of the outer panel 10 and is output to the front of the vehicle. Furthermore, when there is an obstacle at the front of the vehicle, the electromagnetic wave output to the front of the vehicle is reflected by the obstacle, and the sensor apparatus S is configured to receive the electromagnetic wave reflected by the obstacle and passed the sensing wave passing region to sense the obstacle at the front of the vehicle.

The vehicle body structural member 30 is a member of a high rigidity constituting a structural member of the vehicle body. In the front part of the vehicle, the first vehicle body structural member 31, the second vehicle body structural member 32, and the like are provided as the vehicle body structural member 30. That is to say, each element (31, 32) constitutes a part of the vehicle body structural member 30 of the vehicle. Furthermore, each element (31, 32) is made of a metal thin plate or the like.

The first vehicle body structural member 31 and the second vehicle body structural member 32 are separated from each other in the vehicle up-down direction in the front part of the vehicle, and the first vehicle body structural member 31 and the second vehicle body structural member 32 each extends in the vehicle width direction.

In the present embodiment, the first vehicle body structural member 31 is provided on the upside relative to the second vehicle body structural member 32 with respect to the vehicle up-down direction, and it may also be referred to as an upper side cross member or an upper bumper beam. The first vehicle body structural member 31 is also a hood lock member as a structural member receiving a front part of a front hood, not illustrated. Each end part of the first vehicle body structural member 31 is joined to another member, not illustrated, of the vehicle body structural member 30. The second vehicle body structural member 32 is provided on the downside relative to the first vehicle body structural member 31 with respect to the vehicle up-down direction, and it may also be referred to as a lower side cross member or a lower bumper beam. Each end part of the second vehicle body structural member 32 is joined to another member (for example, a front side member), not illustrated, of the vehicle body structural member 30.

### (Detail of Vehicle Structure)

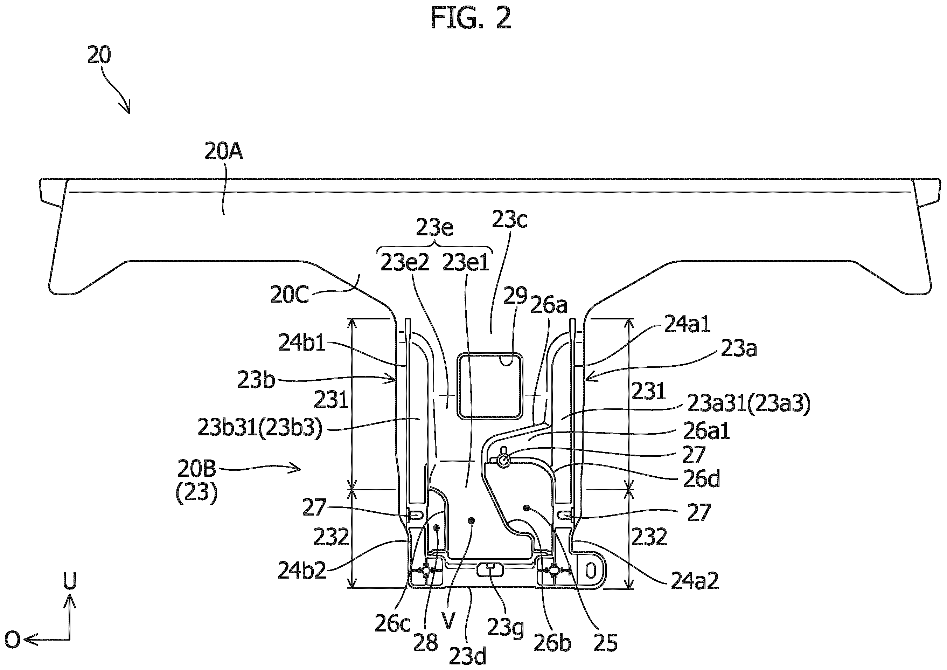

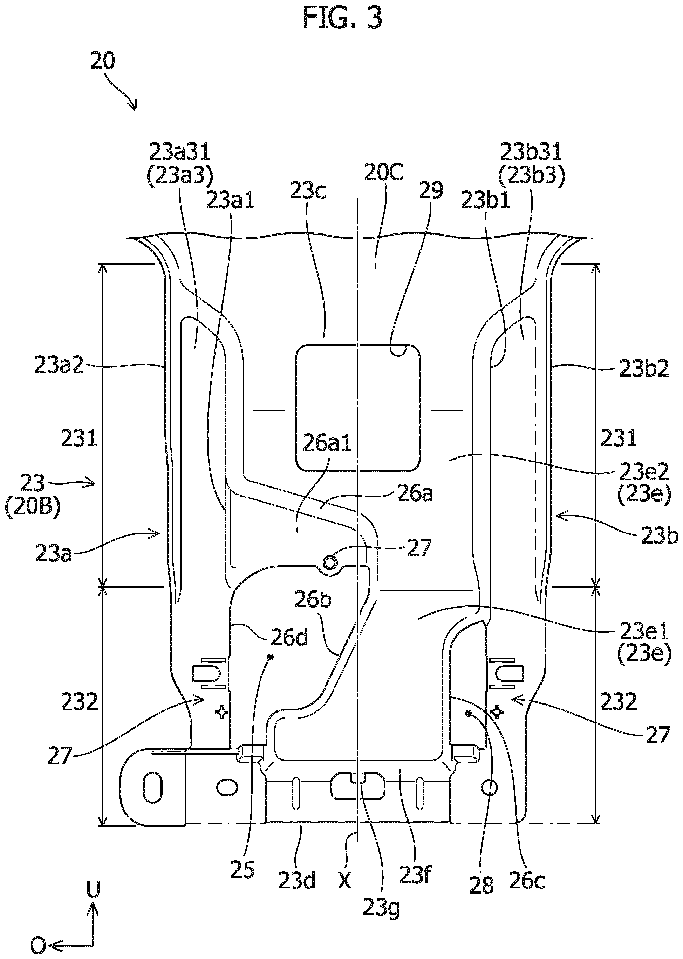

In the following, the vehicle structure 1 will be described in detail while referring to Figure 1 to Figure 7. Figure 2 to Figure 7 are drawings for mainly showing the reinforcing member 20. Figure 2 is a front view of the reinforcing member 20 seen from the front of the vehicle, Figure 3 is an enlarged plan view of a lower part of the reinforcing member 20 seen from the rear of the vehicle, Figure 4 is an enlarged perspective view of the lower part of the reinforcing member seen from the front of the vehicle, and Figure 5 is an enlarged rear view of the lower part of the reinforcing member 20 seen from the rear of the vehicle. In Figure 4 and Figure 5, the sensor apparatus S is attached to the reinforcing member 20. Figure 6 is a partial lateral view of the reinforcing member 20 seen from the side of a first lateral part 23a described later, and Figure 7 is a partial lateral view of the reinforcing member 20 seen from the side of a second lateral part 23b, described later. Note that, in Figure 6 and Figure 7, the outer shape of the impact absorbing member 40 described later is illustrated with a dash-double-dot line, and the sensor apparatus S is removed.

When referring to Figure 1, the reinforcing member 20 is supported by the first vehicle body structural member 31 and the second vehicle body structural member 32 separated from each other in the vehicle up-down direction in the front part of the vehicle.

In the present embodiment, the second vehicle body structural member 32 is positioned on the downside relative to the first vehicle body structural member 31 with respect to the vehicle up-down direction, as mentioned above. In addition, in the present embodiment, the second vehicle body structural member 32 is provided at a position offset to the outer side of the vehicle (here, the front of the vehicle) with respect to the vehicle front-rear direction relative to the first vehicle body structural member 31. That is to say, the second vehicle body structural member 32 is positioned at the front and on the downside relative to the first vehicle body structural member 31.

The reinforcing member 20 is, for example, an injection molded article made of resin. In a planar view, the reinforcing member 20 is generally formed in a T-shape, and in a lateral view, the reinforcing member 20 protrudes to the outer side of the vehicle (here, the front of the vehicle) with respect to the vehicle front-rear direction from the first vehicle body structural member 31 and then is bent so as to extend to the downside toward the second vehicle body structural member 32. The reinforcing member 20 is formed generally along the bumper front surface part 10a in a central part in the vehicle width direction of the back surface of the outer panel 10. In other words, the reinforcing member 20 is a member extending from the first vehicle body structural member 31 to the second vehicle body structural member 32, and connecting the first vehicle body structural member 31 and the second vehicle body structural member 32.

The reinforcing member 20 has first vehicle body coupling parts 21 to be coupled to (to be supported by) the first vehicle body structural member 31, and a second vehicle body coupling part 22 to be coupled to (to be supported by) the second vehicle body structural member 32. The first vehicle body coupling parts 21 are provided on both sides in the vehicle width direction in an upper part of the reinforcing member 20, and the second vehicle body coupling part 22 is provided in the lower part of the reinforcing member 20. Note that, in the present embodiment, the second vehicle body coupling part 22 corresponds to the "vehicle body coupling part" according to the present disclosure.

In the present embodiment, the second vehicle body structural member 32 is provided with a lower support part 50 (see Figure 1) projecting to the upside from the second vehicle body structural member 32 and supporting the lower part of the reinforcing member 20 from the downside.

The lower support part 50 is a member made by bending a thin metal plate. That is to say, in the present embodiment, the lower support part 50 is a member (lower bracket) formed by being physically separated from the second vehicle body structural member 32. Furthermore, the lower support part 50 is joined to the second vehicle body structural member 32.

The first vehicle body coupling parts 21 in the upper part of the reinforcing member 20 are coupled to (are supported by) the first vehicle body structural member 31 by being coupled (being fastened) with a coupling tool such as a bolt, and the second vehicle body coupling part 22 in the lower part of the reinforcing member 20 is coupled to (is supported by) the second vehicle body structural member 32 by being locked to the lower support part 50. Note that the second vehicle body coupling part 22 will be described in detail later.

Next, mainly the shape, the structure, and the like of chief parts of the reinforcing member 20 will be further described in detail.

When referring to Figure 1 to Figure 7, a difference in rigidity with respect to the vehicle up-down direction is imparted to the reinforcing member 20. At the time of a front collision and the like, a load (impact load) due to external force acting on the outer panel 10 is likely to be input to the reinforcing member 20 mainly from the front of the reinforcing member 20 with respect to the vehicle front-rear direction. Furthermore, in the reinforcing member 20, the rigidity against a load in the vehicle front-rear direction differs along the vehicle up-down direction. The difference in rigidity with respect to the vehicle up-down direction is imparted by providing a difference in rigidity for regions vertically adjacent to each other in the reinforcing member 20.

In the illustrated example, the reinforcing member 20 is generally formed in a T-shape as mentioned above, in a planar view seen from one side of the vehicle front-rear direction. That is to say, overall, the reinforcing member 20 is divided (sectioned) into a transverse extension part 20A extending in the vehicle width direction, a vertical extension part 20B extending in the vehicle up-down direction, and a connection part 20C which connects a central part of the transverse extension part 20A in the vehicle width direction and the upper end of the vertical extension part 20B. Furthermore, in the illustrated example, the transverse extension part 20A has a generally L-shaped cross section and extends in the vehicle width direction, and it is formed to have a higher rigidity as compared to the vertical extension part 20B. Accordingly, in the reinforcing member 20, the difference in rigidity with respect to the vehicle up-down direction is imparted by providing the difference in rigidity for the transverse extension part 20A and the vertical extension part 20B which are vertically adjacent to each other through the connection part 20C. In the illustrated example, by greatly varying the shapes of the transverse extension part 20A and the vertical extension part 20B from each other, the difference in rigidity with respect to the vehicle up-down direction is imparted to the entire reinforcing member 20.

In the present embodiment, the reinforcing member 20 has a containing part 23 which is recessed to the inner side of the vehicle with respect to the vehicle front-rear direction and in which the sensor apparatus S is contained. The containing part 23 has a recessed shape which is recessed to the inner side of the vehicle (here, the rear of the vehicle) and is open to the outer side of the vehicle (the front of the vehicle), and a containing space to contain the sensor apparatus S is formed on the inner side of the recessed shape. That is, as a whole, the containing part 23 is formed generally in a recessed shape that is open to the front of the vehicle (in other words, bulges to the rear of the vehicle).

The containing part 23 has a first lateral part 23a, a second lateral part 23b, an upper connection wall 23c, a lower connection wall 23d, and a bottom wall 23e, and the containing space is defined by these elements. In the illustrated example, the containing part 23 constitutes the vertical extension part 20B of the reinforcing member 20. In other words, the containing part 23 is set to a region of the vertical extension part 20B of the reinforcing member 20.

The first lateral part 23a is a lateral part on one side of the containing part 23 in the vehicle width direction, and the second lateral part 23b is a lateral part on the other side of the containing part 23 in the vehicle width direction. The first lateral part 23a and the second lateral part 23b each extends generally in the vehicle up-down direction. The first lateral part 23a and second lateral part 23b are sites in which the sensor apparatus S is positioned and attached, as will be described later.

When referring to Figure 1 to Figure 3, Figure 6, and Figure 7, in the illustrated example, an upper part of the first lateral part 23a and an upper part of the second lateral part 23b are each formed in a shape having a bulging structure that bulges to the outer side of the vehicle (the front of the vehicle).

The first lateral part 23a has a first inner wall 23a1 and a first outer wall 23a2 which are separated from each other in the vehicle width direction, and a first end wall 23a3 having an outer surface 23a31 facing the outer side of the vehicle (the front of the vehicle) with respect to the vehicle front-rear direction. The first end wall 23a3 extends from one end part of the upper connection wall 23c to one end part of the lower connection wall 23d, and connects the front end of the first inner wall 23a1 and the front end of the first outer wall 23a2.

Similarly, the second lateral part 23b has a second inner wall 23b1 and a second outer wall 23b2 which are separated from each other in the vehicle width direction, and a second end wall 23b3 having an outer surface 23b31 facing the outer side of the vehicle (the front of the vehicle) with respect to the vehicle front-rear direction. The second end wall 23b3 extends from the other end part of the upper connection wall 23c to the other end part of the lower connection wall 23d, and connects the front end of the second inner wall 23b1 and the front end of the second outer wall 23b2.

The upper connection wall 23c connects the upper end of the first lateral part 23a and the upper end of the second lateral part 23b. The lower connection wall 23d connects the lower end of the first lateral part 23a and the lower end of the second lateral part 23b. In the illustrated example, the connection part 20C is formed in an inverted trapezoid shape in a planar view, and the upper connection wall 23c continuously extends to the lower end of the connection part 20C.

The bottom wall 23e is a wall (in the illustrated example, can also be referred to as a rear wall) forming the bottom of the recess with respect to the vehicle front-rear direction in the containing part 23. The first lateral part 23a, the second lateral part 23b, the upper connection wall 23c, and the lower connection wall 23d are each connected to a peripheral edge of the bottom wall 23e.

In this regard, in the illustrated example, the sensor apparatus S is arranged in a lower side region V which is a region on the second vehicle body structural member side (lower side) of the containing space of the containing part 23. The lower side region V is a space surrounded by a second vehicle body structural member-side portion (in the illustrated example, a lower part) of the first lateral part 23a, a second vehicle body structural member-side portion (a lower part) of the second lateral part 23b, the lower connection wall 23d, and a second vehicle body structural member-side portion (a lower part) of the bottom wall 23e. In other words, the lower side region V is provided between the second vehicle body structural member-side portion of the first lateral part 23a and the second vehicle body structural member-side portion of the second lateral part.

### (Difference in Rigidity of Lateral Parts)

In the present embodiment, the difference in rigidity with respect to the vehicle width direction imparted to the reinforcing member 20 includes a difference in rigidity of the lateral parts, which is a difference between the rigidity of the upper part and the rigidity of the lower part in the first lateral part 23a and the second lateral part 23b of the containing part 23. Specifically, the difference in rigidity of the lateral parts is a difference between the rigidity against a load in the vehicle front-rear direction in the upper part of the first lateral part 23a and the second lateral part 23b and the rigidity against the load in the vehicle front-rear direction in the lower part of the first lateral part 23a and the second lateral part 23b.

In the present embodiment, the first lateral part 23a and the second lateral part 23b are divided (sectioned) into a high rigidity part 231, which is one of the upper part and the lower part, and a low rigidity part 232, which is the other of the upper part and the lower part and is formed to have a lower rigidity than the high rigidity part 231.

In the present embodiment, the upper part out of the above mentioned one of the upper part and the lower part is formed to have a higher rigidity as compared to the lower part. That is to say, in the illustrated example, the upper part of the first lateral part 23a is formed to have a higher rigidity as compared to the lower part of the first lateral part 23a as the high rigidity part 231, and the upper part of the second lateral part 23b is formed to have a higher rigidity as compared to the lower part of the second lateral part 23b as the high rigidity part 231.

In the present embodiment, the sensor apparatus S is arranged between the low rigidity part 232 (the lower part) of the first lateral part 23a and the low rigidity part 232 (the lower part) of the second lateral part 23b. That is to say, the low rigidity part 232 of the first lateral part 23a forms (defines) the lower side region V, and the low rigidity part 232 of the second lateral part 23b forms (defines) the lower side region V. Furthermore, the low rigidity part 232 of the first lateral part 23a is a portion of the first lateral part 23a that is adjacent to the lower side region V (sensor apparatus S), and the low rigidity part 232 of the second lateral part 23b is a portion of the second lateral part 23b that is adjacent to the lower side region V (sensor apparatus S).

Specifically, in each of the first lateral part 23a and the second lateral part 23b, the bulging structure which bulges to the outer side of the vehicle (the front of the vehicle) mentioned above is formed in the high rigidity part 231 (upper part). That is to say, in the first lateral part 23a, the first inner wall 23a1 and the first outer wall 23a2 are formed in the high rigidity part 231, but are not formed in the low rigidity part 232. Accordingly, the low rigidity part 232 of the first lateral part 23a mainly consists of the first end wall 23a3. Similarly, in the second lateral part 23b, the second inner wall 23b1 and the second outer wall 23b2 are formed in the high rigidity part 231, but are not formed in the low rigidity part 232. Accordingly, the low rigidity part 232 of the second lateral part 23b mainly consists of the second end wall 23b3. That is to say, the first inner wall 23a1, the first outer wall 23a2, the second inner wall 23b 1, and the second outer wall 23b2 are omitted in the low rigidity part 232. In both the first lateral part 23a and the second lateral part 23b, a length (thickness) of the low rigidity part 232 in the vehicle front-rear direction is remarkably shorter (thinner) than a length (thickness) of the high rigidity part 231 in the vehicle front-rear direction. In this manner, in the first lateral part 23a, by providing variation between the shape of the upper part and the shape of the lower part, the rigidity against a load in the front-rear direction of the lower part of the first lateral part 23a is made lower than the rigidity against the load in the front-rear direction of the upper part of the first lateral part 23a. Similarly, in the second lateral part 23b, by providing variation between the shape of the upper part and the shape of the lower part, the rigidity against a load in the front-rear direction of the lower part of the second lateral part 23b is made lower than the rigidity against the load in the front-rear direction of the upper part of the second lateral part 23b. That is to say, the difference in rigidity of the lateral parts is imparted between the rigidity of the upper part and the rigidity of the lower part in the first lateral part 23a and the second lateral part 23b.

In the present embodiment, in each of the first lateral part 23a and the second lateral part 23b, the high rigidity part 231 has a protruding part (24a1, 24b1) which protrudes to the outer side of the vehicle (in the illustrated example, the front of the vehicle) relative to the low rigidity part 232 with respect to the vehicle front-rear direction. That is to say, the high rigidity part 231 of the first lateral part 23a has the protruding part 24a1 which protrudes to the front relative to the low rigidity part 232 of the first lateral part 23a, and the high rigidity part 231 of the second lateral part 23b has the protruding part 24b1 which protrudes to the front relative to the low rigidity part 232 of the second lateral part 23b.

In the present embodiment, in each of the first lateral part 23a and the second lateral part 23b, the protruding part (24a1, 24b1) is a rib of a thin plate shape extending in the vehicle up-down direction. In the illustrated example, the protruding part 24a1 (hereinafter, referred to as the first upper rib 24a1 as appropriate) of the first lateral part 23a is formed on the front surface (that is, on the outer surface 23a31 facing the outer side of the vehicle) of the first end wall 23a3 in the high rigidity part 231, and the protruding part 24b1 (hereinafter, referred to as the second upper rib 24b 1 as appropriate) of the second lateral part 23b is formed on the front surface (that is, the outer surface 23b31 facing the outer side of the vehicle) of the second end wall 23b3 in the high rigidity part 231. Accordingly, in the portion (high rigidity part 231) bulging to the front in the first lateral part 23a and the second lateral part 23b, the front surface (outer surface 23a31) of the first end wall 23a3 and the front surface (outer surface 23b31) of the second end wall 23b3 each forms a seating surface of the protruding part (24a1, 24b1). The protruding part (24a1, 24b1) extends to the vicinity of the back surface of the outer panel 10, and the front end of the protruding part (24a1, 24b1) is positioned at the vicinity of the back surface of the outer panel 10.

In the present embodiment, the sensor apparatus S is arranged inside the containing part 23 such that the sensor outer surface Sa does not protrude to the front relative to the front end of the low rigidity part 232 with respect to the vehicle front-rear direction. In the illustrated example, in the low rigidity part 232 adjacent to the sensor apparatus S, a first lower rib 24a2 is formed on the front surface of the first end wall 23a3 in the first lateral part 23a, and a second lower rib 24b2 is formed on the front surface of the second end wall 23b3 in the second lateral part 23b. The first lower rib 24a2 extends from the lower end of the protruding part (first upper rib) 24a1 in the first lateral part 23a continuously to the downside and has a projection length shorter than a projection length of the protruding part 24a1 in the vehicle front-rear direction. Similarly, the second lower rib 24b2 extends from the lower end of the protruding part (second upper rib) 24b1 in the second lateral part 23b continuously to the downside and has a projection length shorter than a projection length of the protruding part 24b1 in the vehicle front-rear direction. Furthermore, in the illustrated example, the sensor apparatus S is arranged inside the containing part 23 such that the sensor outer surface Sa is positioned on the same plane as the front end of the lower rib (24a2, 24b2) in the low rigidity part 232. Accordingly, the sensor apparatus S does not protrude to the front of the vehicle relative to the front end of the low rigidity part 232. Note that, even by considering the projection length of the lower rib (24a2, 24b2) in the low rigidity part 232, in both the first lateral part 23a and the second lateral part 23b, a length (thickness) of the low rigidity part 232 in the vehicle front-rear direction is remarkably shorter than a length (thickness) of the high rigidity part 231 in the vehicle front-rear direction.

Note that, in the present embodiment, a gap is provided between the front end of the lower rib (24a2, 24b2) and the back surface of the outer panel 10. As illustrated in Figure 1, Figure 6, and Figure 7, the vehicle structure 1 has the impact absorbing member 40 so as to block the gap between the front end of the lower rib (24a2, 24b2) and the back surface of the outer panel 10. The impact absorbing member 40 is a member extending in the vehicle up-down direction along the low rigidity part 232 and having a thin-plate shaped site projecting to the outer side of the vehicle (in the illustrated example, the front of the vehicle) relative to the low rigidity part 232 with respect to the vehicle front-rear direction, in each of the first lateral part 23a and the second lateral part 23b. The impact absorbing member 40 extends, for example, from a front part of the air guiding member (shroud) arranged at the rear of the reinforcing member 20 to the vicinity of the back surface of the outer panel 10, and is provided along a lateral surface of the low rigidity part 232 on the outer side in the vehicle width direction. Note that the impact absorbing member 40 is not illustrated in Figure 4 and Figure 5.

### (Difference in Rigidity of Bottom Wall)

In the present embodiment, the difference in rigidity with respect to the vehicle up-down direction imparted to the reinforcing member 20 includes a difference in rigidity of the bottom wall which is a difference between the rigidity of an upper part of an opposing bottom wall part 23e1, which is a portion of the bottom wall 23e of the containing part 23 that opposes the sensor apparatus S, and the rigidity of a lower part of the opposing bottom wall part 23e1. That is to say, the rigidity against a load in the vehicle front-rear direction varies in the vehicle up-down direction also in the bottom wall 23e.

In the illustrated example, on the bottom wall 23e of the containing part 23, a first opening 25 is open in an open shape that is large and flat, in a region that is positioned between the low rigidity part 232 of the first lateral part 23a and the low rigidity part 232 of the second lateral part 23b and is shifted to the first lateral part 23a side which is one side in the vehicle width direction. Specifically, an inner-side edge of the first opening 25 in the vehicle width direction is inclined so as to approach a center line X in the vehicle width direction of the reinforcing member 20 toward the upside of the vehicle. Accordingly, a wall width of the upper part of the opposing bottom wall part 23e1 in the vehicle width direction is shorter than a wall width of the lower part of the opposing bottom wall part 23e1 in the vehicle width direction. As a result, the rigidity of the upper part of the opposing bottom wall part 23e1 has a lower rigidity as compared to the rigidity of the lower part of the opposing bottom wall part 23e1. In this manner, in the present embodiment, the difference in rigidity of the bottom wall is a difference in rigidity caused between the upper part and the lower part of the opposing bottom wall part 23e1 by opening the first opening 25 on the bottom wall 23e of the containing part 23 such that the first opening 25 has an opening edge that is inclined relative to the center line X.

Specifically, in the illustrated example, in a portion of the bottom wall 23e that corresponds to the lower side region V, the first opening 25 is open in a region on the first lateral part 23a side. In the illustrated example, as mentioned above, in the low rigidity part 232 of the first lateral part 23a that is adjacent to the lower side region V, the first inner wall 23a1 and the first outer wall 23a2 are omitted. As a result, in the illustrated example, the first opening 25 can be visually recognized as being formed as a notch that is notched from an edge on the first lateral part 23a side toward the second lateral part 23b side, on the bottom wall 23e.

In the present embodiment, the rigidity in the periphery of the first opening 25 is improved in the reinforcing member 20 so as to ensure the support rigidity of the sensor apparatus S at the time of ordinary use. Specifically, in the present embodiment, the reinforcing member 20 has an intermediate connection wall 26a and a first vertical connection wall 26b. The intermediate connection wall 26a is positioned on the upside of the sensor apparatus S, and it connects the bottom wall 23e and the high rigidity part 231 of the first lateral part 23a. The intermediate connection wall 26a extends in the vehicle front-rear direction and the vehicle width direction. The intermediate connection wall 26a extends from the first lateral part 23a to a position in the vicinity of the center line X in the vehicle width direction of the reinforcing member 20 (containing part 23). Furthermore, the first vertical connection wall 26b is positioned at the rear of the sensor apparatus S, and it connects an inner side end of the intermediate connection wall 26a in the vehicle width direction and one end part of the lower connection wall 23d. The first vertical connection wall 26b extends in the vehicle front-rear direction, and is inclined in a shape matching the opening shape of the first opening 25.

Specifically, in the illustrated example, the intermediate connection wall 26a connects the bottom wall 23e and the first lateral part 23a (first inner wall 23a1) along an upper edge of the first opening 25 formed on the bottom wall 23e. Furthermore, the first vertical connection wall 26b connects the bottom wall 23e, the intermediate connection wall 26a, and the lower connection wall 23d along a lateral edge of the first opening 25 on the second lateral part 23b side. In this manner, in the reinforcing member 20, the difference in rigidity of the bottom wall is caused by the first opening 25, and the rigidity in the periphery of the first opening 25 is improved by the intermediate connection wall 26a and the first vertical connection wall 26b.

### (Periphery Structure of Sensor Apparatus)

When referring to Figure 2 to Figure 7, the reinforcing member 20 has a plurality of (here, three) fixing parts 27 for arranging the sensor apparatus S at a predetermined position of the lower side region V. The fixing parts 27 are provided on, for example, the rear surface of the first end wall 23a3, the rear surface of the second end wall 23b3, and the rear surface of a flange 26a1 extending to the downside from the intermediate connection wall 26a. The first end wall 23a3, the second end wall 23b3, and the flange 26a1 each forms a seating surface of the fixing part 27. The sensor support plate P is fixed on the rear surface of the sensor apparatus S. With this sensor support plate P being positioned against the containing part 23 by the three fixing parts 27 and being fastened to the containing part 23 with a coupling tool such as a bolt, the sensor apparatus S is attached to the reinforcing member 20 in a predetermined posture at a predetermined position of the lower side region V.

In the illustrated example, as mentioned above, in the low rigidity part 232 of the second lateral part 23b that is adjacent to the lower side region V, the second inner wall 23b1 and the second outer wall 23b2 are omitted. Furthermore, in a portion on the second lateral part 23b side of the opposing bottom wall part 23e1, a second opening 28 is formed in a mode of being notched toward the first lateral part 23a. An end part of the sensor support plate P is configured such that it can access the fixing part 27 on the second end wall 23b3 side from the lower side region V through a plate insertion port consisting of the second opening 28 and a portion that is open due to the omission of the second inner wall 23b1. In addition, in the illustrated example, a second vertical connection wall 26c is formed along an edge of the second opening 28. As a result, the rigidity in the periphery of the second opening 28 is improved.

In addition, at the center of the containing part 23 (vertical extension part 20B) in the vehicle width direction, a third opening 29 is open in a portion from the upper connection wall 23c throughout the upper part of the bottom wall 23e. The third opening 29 is open in an opening area that is about the same size as the first opening 25 and larger than the second opening 28. In addition, a portion on the upside than the opposing bottom wall part 23e1 of the bottom wall 23e is formed as an inclined bottom wall part 23e2 which is inclined so as to be away from the outer panel 10 toward the downside. That is to say, in the illustrated example, the bottom wall 23e has the opposing bottom wall part 23e1 and the inclined bottom wall part 23e2, which extends obliquely to the upside from the upper end of the opposing bottom wall part 23e1 to the lower end of the upper connection wall 23c. Furthermore, a portion of a central upper part of the inclined bottom wall part 23e2 is notched by the third opening 29.

In the present embodiment, a sensor insertion port 26b1 (refer to Figure 6) through which the sensor apparatus S can be inserted from one side of the containing part 23 in the vehicle width direction to the inside of the containing part 23, is open in the reinforcing member 20. In the illustrated example, the sensor insertion port 26b1 is configured such that the sensor apparatus S can be inserted, from the first lateral part 23a side, to the lower side region V inside the containing part 23. Specifically, as mentioned above, in the low rigidity part 232 of the first lateral part 23a that is adjacent to the lower side region V, the first inner wall 23a1 and the first outer wall 23a2 are omitted. Furthermore, with the first vertical connection wall 26b being largely notched (having a large notch) from its front end toward the rear, the sensor insertion port 26b1 is formed as a space that is surrounded by the edge of the notch of the first vertical connection wall 26b and the back surface of the first end wall 23a3. The sensor apparatus S is inserted into the lower side region V through the sensor insertion port 26b 1. Furthermore, the end part of the sensor support plate P is configured such that it can access the fixing part 27 on the first end wall 23a3 side through the sensor insertion port 26b1.

When referring to Figure 2 to Figure 4, the flange 26a1 forming the seating surface of the fixing part 27 on the upper side extends from the lower part of the first inner wall 23a1 in the first lateral part 23a to the upper part of the first vertical connection wall 26b, and is connected to each of the intermediate connection wall 26a, the first inner wall 23a1, and the first vertical connection wall 26b. As a result, the rigidity in the periphery of the fixing part 27 on the upper side is enhanced, and the support rigidity of the sensor apparatus S is enhanced, thereby appropriately retaining the sensor apparatus S.

In addition, the fixing part 27 provided for the flange 26a1 and the fixing part 27 provided on the first end wall 23a3 are connected by a third vertical connection wall 26d. The third vertical connection wall 26d extends from the fixing part 27 on the first end wall 23a3 along the outer surface 23a31 and the flange 26a1. The third vertical connection wall 26d projects to the front of the vehicle and is curved in the vehicle width direction so as to couple the two fixing parts 27. As a result, with the third vertical connection wall 26d, the rigidity in the periphery of the fixing part 27 on the upper side is effectively enhanced, and the rigidity in the periphery of the fixing part 27 on the first end wall 23a3 is moderately maintained.

In addition, a region (flange 26a1) in which the fixing part 27 on the upper side is provided is supported by the lower connection wall 23d through the intermediate connection wall 26a, the inclined bottom wall part 23e2, and the opposing bottom wall part 23e1. As a result, the support rigidity of the sensor apparatus S is enhanced.

Moreover, in the periphery of the fixing part 27 on the second end wall 23b3, as mentioned above, the second vertical connection wall 26c is formed along the edge of the second opening 28, and the second vertical connection wall 26c and the opposing bottom wall part 23e1 on the upside of the second vertical connection wall 26c connect to the vicinity of the fixing part 27 on the second end wall 23b3. As a result, the rigidity in the periphery of the fixing part 27 on the second end wall 23b3 is enhanced.

In the present embodiment, the containing part 23 has a lower wall 23f extending from the lower end of the opposing bottom wall part 23e1 to the outer side of the vehicle (in the illustrated example, the front of the vehicle) with respect to the vehicle front-rear direction. Furthermore, the vehicle body coupling part (second vehicle body coupling part 22) to be coupled to the second vehicle body structural member 32 is set on the lower wall 23f.

In the present embodiment, on the surface on the opposing bottom wall part 23e1 side (in the illustrated example, the rear surface) of the sensor apparatus S, a connection port Sb is provided to which electrical wiring such as a harness may be connected, and a portion of the opposing bottom wall part 23e1 that corresponds to at least the connection port Sb is open in the vehicle front-rear direction. Specifically, in the sensor support plate P, a harness drawing port P1 (in other words, a harness insertion hole) for drawing out electrical wiring such as a harness (cord-like body) to be electrically connected to the connection port Sb of the sensor apparatus S is open at a position that overlaps with the connection port Sb of the sensor apparatus S. Furthermore, a portion of the opposing bottom wall part 23e1 that corresponds to the connection port Sb and the harness drawing port P1 is open in the vehicle front-rear direction through a large open space formed by the first opening 25, i.e., a region surrounded by the intermediate connection wall 26a, the first vertical connection wall 26b, and the first end wall 23a3. Moreover, electrical wiring such as a harness is drawn out to the rear of the reinforcing member 20 through the large open space.

An engaging claw 23g is formed on a lower surface of the lower wall 23f extending from the lower end of the opposing bottom wall part 23e1. The engaging claw 23g projects from the lower surface of the lower wall 23f. The second vehicle body coupling part 22 set on the lower wall 23f abuts on an upper surface of the lower support part 50 (refer to Figure 1). A lock hole is open in the lower support part 50, and engaging claw 23g is locked to the lock hole in a state in which the second vehicle body coupling part 22 (lower wall 23f) abuts on the upper surface of the lower support part 50. In this manner, the second vehicle body coupling part 22 in the lower part of the reinforcing member 20 is locked to the lower support part 50, and the second vehicle body coupling part 22 is coupled to (is supported by) the second vehicle body structural member 32.

### (Deformation Process)

Next, an example of an overview of a deformation process of the reinforcing member 20 when receiving external force will be described.

For example, at the time of a front collision and the like, a load (impact load) due to external force acting on the outer panel 10 is likely to be input to the reinforcing member 20 from the front end of the reinforcing member 20. In the illustrated example, a front-end region of the reinforcing member 20 is the front end of the protruding part 24a1 in the first lateral part 23a and the front end of the protruding part 24b1 in the second lateral part 23b. In addition, in the illustrated example, the front end of the protruding part (24a1, 24b1) generally matches the front end of the impact absorbing member 40 along an outer side surface of the first lateral part 23a and the front end of the impact absorbing member 40 along an outer side surface of the second lateral part 23b, with respect to a position in the vehicle front-rear direction. Accordingly, in the illustrated example, the impact load is first applied to the protruding part (24a1, 24b1) and the impact absorbing member (40, 40), and these elements (24a1, 24b1, 40, 40) start deformation. Furthermore, once the deformation of the protruding part (24a1, 24b1) and the impact absorbing member 40 progresses, input of the load to the low rigidity part 232 also begins. At this time, at first, a lower side portion of the containing part 23 including the low rigidity part 232 deforms so as to be displaced generally to the rear, and then the load starts to concentrate on an upper side portion of the containing part 23 including the high rigidity part 231, thereby enlarging (expanding) a deformation range to the high rigidity side. As a result, the vertical extension part 20B of the reinforcing member 20 deforms as a whole. In this manner, in the illustrated example, once an impact load is input, the reinforcing member 20 deforms mainly in three stages, which are deformation of the protruding part (24a1, 24b1) and the impact absorbing member (40, 40), local deformation of a portion including the low rigidity part 232 of the containing part 23 (vertical extension part 20B), and whole deformation of the containing part 23 (vertical extension part 20B), and impact energy is efficiently consumed and efficiently absorbed as deformation energy. Furthermore, once the deformation of the vertical extension part 20B progresses, the load also starts to concentrate on the transverse extension part 20A, thereby enlarging (expanding) the deformation range also in the vehicle up-down direction (in the illustrated example, upward). As a result, the reinforcing member 20 finally deforms as a whole, and the impact energy is more certainly consumed and absorbed.

In the illustrated example, in the lower side portion of the containing part 23, the first opening 25 is open at a position that is shifted to the first lateral part 23a side on the bottom wall 23e. As a result, in the lower side portion of the containing part 23, the rigidity of a portion on the first lateral part 23a side is made lower than the rigidity of a portion on the second lateral part 23b side. That is to say, a difference in rigidity is imparted to the lower side portion of the containing part 23 also with respect to the vehicle width direction. Accordingly, in the local deformation of the portion including the low rigidity part 232, at first, the portion on the first lateral part 23a side deforms so as to be displaced to the rear, and then the load starts to concentrate on the portion on the second lateral part 23b side, thereby effectively enlarging the deformation range in the vehicle width direction. As a result, the local deformation may occur as entire twist deformation of the lower side portion of the containing part 23. Moreover, in the lower side portion of the containing part 23, a difference in rigidity is imparted between the rigidity of the upper part and the rigidity of the lower part in the opposing bottom wall part 23e1. As a result, the deformation of the lower side portion of the containing part 23 is further effectively promoted, and the entire twist deformation may be further promoted.

In the vehicle structure 1 according to the present embodiment having configurations as above, in the reinforcing member 20, the difference in rigidity is imparted with respect to the vehicle up-down direction. Accordingly, when receiving external force, the reinforcing member 20 is likely to deform in at least two stages which are local deformation on the low rigidity side and entire deformation for example, and the deformation range of the reinforcing member 20 is effectively enlarged and increased. As a result, the impact energy is efficiently consumed and efficiently absorbed as deformation energy

In this manner, the vehicle structure 1 according to the present embodiment is a vehicle structure having a structure capable of efficiently absorbing impact energy.

In the present embodiment, the difference in rigidity includes a difference in rigidity of the lateral parts which is a difference between the rigidity of the upper part and the rigidity of the lower part in the first lateral part 23a, which is one lateral part of the containing part 23 in the vehicle width direction, and the second lateral part 23b, which is the other lateral part of the containing part 23 in the vehicle width direction. The containing part 23 is a portion that is recessed to the inner side of the vehicle and forms a containing space to contain the sensor apparatus S in its inner side, and it is a portion that is likely to deform. Accordingly, in the containing part 23 which is likely to deform, by imparting the difference in rigidity vertically in the first lateral part 23a and the second lateral part 23b, deformation of the reinforcing member 20 is likely to be efficiently promoted.

In the present embodiment, the first lateral part 23a and the second lateral part 23b are vertically divided into high rigidity part 231 and low rigidity part 232, and the sensor apparatus S is arranged between the low rigidity part 232 of the first lateral part 23a and the low rigidity part 232 of the second lateral part 23b. The high rigidity part 231 has the protruding part (24a1, 24b1) which protrudes to the outer side of the vehicle relative to the low rigidity part 232 with respect to the vehicle front-rear direction. Accordingly, at the time of a front collision and the like, external force is input to the protruding part (24a1, 24b1) on the high rigidity part 231 side at first, and at an initial stage in which the external force is input, the impact load is dispersed to a region that is away from the sensor apparatus S in the up-down direction. As a result, at the initial stage, the size of a load (external force) that may be transferred to the sensor apparatus S is decreased, and protection of the sensor apparatus S may be achieved.

In the present embodiment, the protruding part (24a1, 24b1) is a rib of a thin plate shape extending in the vehicle up-down direction. Accordingly, at the initial stage and the like, the protruding part (24a1, 24b1) efficiently deforms, and a part or all of the impact energy is efficiently consumed in a region that is away from the sensor apparatus S. In addition, with the protruding part (24a1, 24b1), a gap between the containing part 23 and the outer panel 10 can also be effectively blocked. As a result, entry of foreign matter such as rainwater or snow into the containing part 23 from the outer side of the containing part 23 in the vehicle width direction may also be reduced. Moreover, when the reinforcing member 20 is arranged at the rear of the front grille (air intake member) in the outer panel 10 as in the present embodiment, entry of outdoor air entering through the vent holes of the front grille into the containing part 23 from the outer side of the containing part 23 in the vehicle width direction may also be reduced. As a result, the outdoor air is efficiently guided toward the radiator, and an air guiding efficiency is improved.

In the present embodiment, the reinforcing member 20 includes the impact absorbing member 40 extending in the vehicle up-down direction along the low rigidity part 232 and having a thin-plate shaped site projecting to the outer side of the vehicle relative to the low rigidity part 232 with respect to the vehicle front-rear direction. In this manner, at the initial stage and the like, even if the external force (impact load) is directly input to the portion on the low rigidity part 232 side, a part or all of its impact energy is consumed as deformation energy of the impact absorbing member 40, and the sensor apparatus S is more certainly protected. In addition, as in the case of the protruding part (24a1, 24b1), the impact absorbing member 40 can reduce entry of a foreign matter into the containing part 23 and can improve the air guiding efficiency.

In the present embodiment, the difference in rigidity includes a difference in rigidity of the bottom wall which is a difference between the rigidity of the upper part of the opposing bottom wall part 23e1, which is the portion of the bottom wall 23e of the containing part 23 that opposes the sensor apparatus S, and the rigidity of the lower part of the opposing bottom wall part 23e1. With the difference in rigidity of the bottom wall, deformation of the opposing bottom wall part 23e1 of the containing part 23 is further effectively promoted, and deformation of the reinforcing member 20 is further effectively promoted by utilizing the deformation of the containing part 23.

In the present embodiment, the containing part 23 has the lower wall 23f extending from the lower end of the opposing bottom wall part 23e1, which opposes the sensor apparatus S, to the outer side of the vehicle with respect to the vehicle front-rear direction, and the vehicle body coupling part (second vehicle body coupling part 22) to be coupled to the second vehicle body structural member 32 is set on this lower wall 23f. Accordingly, the sensor apparatus S is attached to the containing part 23 in the vicinity of a coupling location (second vehicle body coupling part 22) with the vehicle body structural member 30 having a high rigidity of the containing part 23. As a result, the support rigidity of the sensor apparatus S at the time of ordinary use when not receiving external force is easily ensured.

In the present embodiment, the connection port Sb to which an electrical wiring such as a harness is connected, is provided on a surface of the sensor apparatus S on the opposing bottom wall part 23e1 side. Furthermore, since the portion of the opposing bottom wall part 23e1 that corresponds to at least the connection port Sb is open in the vehicle front-rear direction, through this open portion (in the illustrated example, the largely open space formed by the first opening 25), the electrical wiring can be drawn to the rear of the reinforcing member 20, or the electrical wiring can be connected to the connection port Sb from the rear of the reinforcing member 20. That is to say, efficiency of wiring work of the electrical wiring is achieved. In addition, even if the reinforcing member 20 deforms due to external force and the sensor apparatus S moves to the inner side of the vehicle in accordance with the deformation of the reinforcing member 20, contact of the connection port Sb and the opposing bottom wall part 23e1 is certainly prevented. As a result, protection of the sensor apparatus S is more reliably achieved.

In the present embodiment, the sensor insertion port 26b1 through which the sensor apparatus S can be inserted into the containing part 23 from one side of the containing part 23 in the vehicle width direction is open in the reinforcing member 20. In this manner, attachment work of the sensor apparatus S to the inside of the containing part 23 and maintenance of the sensor apparatus S can be easily performed through the sensor insertion port 26b1 and the like. In addition, since the sensor insertion port 26b1, which is large, is open in the reinforcing member 20 (containing part 23), the difference in rigidity with respect to the vehicle width direction is easily provided for the containing part 23, and deformation of the containing part 23 may be further promoted.

In addition, in the present embodiment, for the lower side portion of the containing part 23 of the reinforcing member 20, not only is the difference in rigidity with respect to the vehicle up-down direction imparted, but the difference in rigidity with respect to the vehicle width direction is also imparted by forming the first opening 25 and the second opening 28. As a result, at the time of front collision and the like, deformation of the containing part 23 may be further effectively promoted.

Although embodiments of the present disclosure have been described above, the present disclosure is not limited to the embodiments mentioned above, and further modification or alteration can be made based on the technical concept of the present disclosure.

For example, in the present embodiment, in the reinforcing member 20, the difference in rigidity of the lateral parts with respect to the vehicle up-down direction is imparted by varying the lengths (thicknesses) of the upper part and the lower part in the front-rear direction both in the first lateral part 23a and the second lateral part 23b, but this is not so limited, it may be imparted by varying the sizes of holes in the upper part and the lower part, or by forming a hole in either of the upper part and the lower part. That is to say, (1) a through hole such as a long hole penetrating the lateral part (23a, 23b) in the front-rear direction may be formed in each of the upper part and the lower part of the first lateral part 23a and the upper part and the lower part of the second lateral part 23b, and the through hole of either of the upper part and the lower part may be open larger than the through hole of the other of the upper part and the lower part, or (2) the through hole may be formed only in one of the upper part and the lower part.

In addition, the inner wall (23a1, 23b1) and the outer wall (23a2, 23b2) may be provided in each of the lower part of the first lateral part 23a and the lower part of the second lateral part 23b, which are the low rigidity side. In this case, in the reinforcing member 20, for example, (1) the through hole may be formed on at least one of the first inner wall 23a1 and the first outer wall 23a2 in the lower part of the first lateral part 23a, and the through hole may be formed on at least one of the second inner wall 23b1 and the second outer wall 23b2 in the lower part of the second lateral part 23b, (2) the length (thickness) in the front-rear direction of at least one of the first inner wall 23a1 and the first outer wall 23a2 in the lower part of the first lateral part 23a may be set shorter (thinner) than the length (thickness) in the front-rear direction of the first inner wall 23a1 and the first outer wall 23a2 in the upper part of the first lateral part 23a, and the length (thickness) in the front-rear direction of at least one of the second inner wall 23b1 and the second outer wall 23b2 in the lower part of the second lateral part 23b may be set shorter (thinner) than the length (thickness) in the front-rear direction of the second inner wall 23b1 and the second outer wall 23b2 in the upper part of the second lateral part 23b, (3) a fragile part may be formed on at least one of the first inner wall 23a1 and the first outer wall 23a2 in the lower part of the first lateral part 23a, and a fragile part may be formed on at least one of the second inner wall 23b1 and the second outer wall 23b2 in the lower part of the second lateral part 23b, or (4) the above-mentioned (1) to (3) may be combined and applied to the reinforcing member 20. These points are also used to impart the difference in rigidity of the lateral parts as the difference between the rigidity of the upper part and the rigidity of the lower part in the first lateral part 23a and the second lateral part 23b.

In the present embodiment, the difference in rigidity with respect to the vehicle up-down direction includes both the difference in rigidity of the lateral parts and the difference in rigidity of the bottom wall (the difference in rigidity of the bottom part), but this is so not limited, only one of the difference in rigidity of the lateral parts and the difference in rigidity of the bottom wall need be included. In addition, although the difference in rigidity with respect to the vehicle width direction (horizontal direction) is also imparted to the reinforcing member 20, this is not so limited, and such a difference in rigidity with respect to the vehicle width direction (horizontal direction) need not be imparted. In addition, the difference in rigidity with respect to the vehicle up-down direction may be imparted not only to the reinforcing member 20, but also to, for example, the lower support part 50.

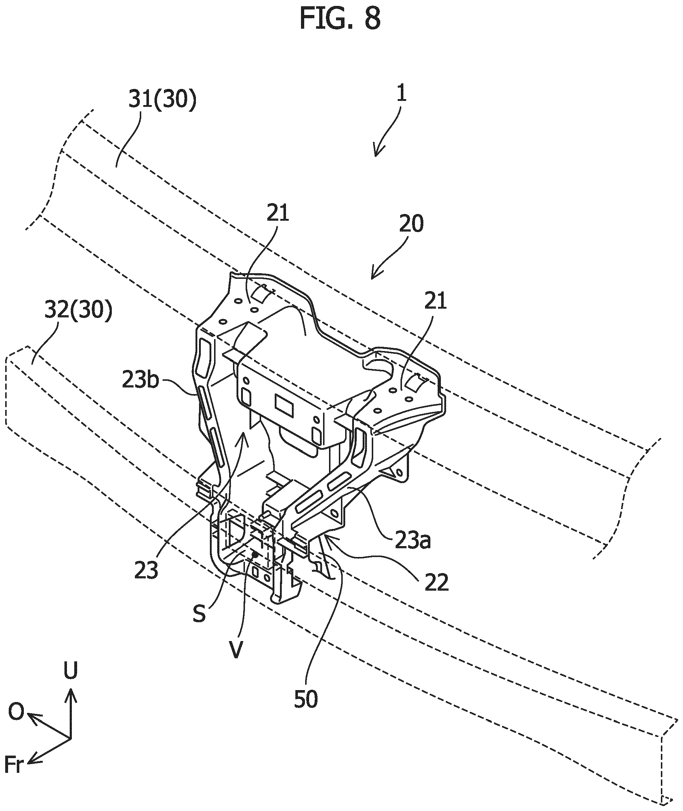

In addition, the reinforcing member 20 is generally formed in a T-shape, but the present disclosure is not limited to this. For example, as illustrated in Figure 8 which is a perspective view of the reinforcing member 20 according to a modification, the reinforcing member 20 may be formed in an inverted trapezoid-like outer shape in which the upper base is longer than the lower base, and the reinforcing member 20 may be formed such that the rigidity of the upper part becomes higher than the rigidity of the lower part. In addition, although not illustrated, the reinforcing member 20 may be formed in a trapezoid-like outer shape in which the upper base is shorter than the lower base, or it may be in a triangle-like outer shape that is convex upward. In these cases, for example, the first vehicle body structural member 31 and the second vehicle body structural member 32 are vertically switched, and the sensor apparatus S is contained inside the containing part 23 in the upper part of the reinforcing member 20.

Furthermore, the outer panel 10 is a front bumper having a front grille, but the present disclosure is not limited to this. The outer panel 10 may be, for example, a front bumper not having a front grille, a single body of a front grille, or a decorative member (for example, a metallic-appearing member).

The sensor apparatus S is not limited to a radar using a millimeter wave or a microwave, and it only needs to be an apparatus that senses an exterior environment of a vehicle. It may be an ultrasonic wave sensor that senses an exterior environment of a vehicle by using an ultrasonic wave, or it may be an imaging apparatus such as a camera that senses an exterior environment of a vehicle by imaging.

In the present embodiment, the vehicle structure 1 is applied as a front part structure of a vehicle, but the present disclosure is not limited to this. Not limited to a front part of a vehicle, the sensor apparatus S may also be attached to a rear part of the vehicle or a lateral part of the vehicle, and the vehicle structure 1 may be applied as a rear part structure of the vehicle or a lateral part structure of the vehicle. In the case of the rear part structure, the outer panel 10 is, for example, a rear bumper, a rear grille, a back panel, a rear door panel, or the like, and in the case of the lateral part structure, the outer panel 10 is, for example, a side panel or a side door panel.

### [Reference Signs List]

- 1: Vehicle structure
- 20: Reinforcing member
- 22: Second vehicle body coupling part (vehicle body coupling part)
- 23: Containing part
- 23a: First lateral part
- 26b1: Sensor insertion port
- 23b: Second lateral part
- 23e: Bottom wall
- 23e1: Opposing bottom wall part
- 231: High rigidity part
- 232: Low rigidity part
- 24a1: Protruding part
- 24b1: Protruding part
- 26a: Intermediate connection wall
- 23f: Lower wall
- 30: Vehicle body structural member
- 31: First vehicle body structural member
- 32: Second vehicle body structural member
- 40: Impact absorbing member
- S: Sensor apparatus
- Sb: Connection port

## Claims

1. A vehicle structure comprising: a reinforcing member supported by a first vehicle body structural member and a second vehicle body structural member separated from each other in a vehicle up-down direction in a front part or a rear part of a vehicle; and a sensor apparatus attached to the reinforcing member, **characterized in that**
a difference in rigidity with respect to the vehicle up-down direction is imparted to the reinforcing member.

2. The vehicle structure according to claim 1, wherein
the reinforcing member has a containing part which is recessed to an inner side of the vehicle with respect to a vehicle front-rear direction and contains the sensor apparatus, and
the difference in rigidity includes a difference in rigidity of lateral parts which is a difference between a rigidity of an upper part and a rigidity of a lower part in a first lateral part, which is one lateral part of the containing part in a vehicle width direction, and a second lateral part, which is the other lateral part of the containing part in the vehicle width direction.

3. The vehicle structure according to claim 2, wherein
the first lateral part and the second lateral part are divided into a high rigidity part, which is one of the upper part and the lower part, and a low rigidity part, which is the other of the upper part and the lower part and is formed to have a lower rigidity than the high rigidity part,
the sensor apparatus is arranged between the low rigidity part of the first lateral part and the low rigidity part of the second lateral part, and
the high rigidity part has a protruding part which protrudes to an outer side of the vehicle relative to the low rigidity part with respect to the vehicle front-rear direction.

4. The vehicle structure according to claim 3, wherein the protruding part is a rib of a thin plate shape extending in the vehicle up-down direction.

5. The vehicle structure according to claim 4, comprising an impact absorbing member extending in the vehicle up-down direction along the low rigidity part and having a thin plate shaped site projecting to the outer side of the vehicle relative to the low rigidity part with respect to the vehicle front-rear direction.

6. The vehicle structure according to claim 1, wherein
the reinforcing member has a containing part which is recessed to an inner side of the vehicle with respect to the vehicle front-rear direction and contains the sensor apparatus,
the containing part has a bottom wall which forms a bottom of a recess with respect to the vehicle front-rear direction in the containing part, and
the difference in rigidity includes a difference in rigidity of the bottom wall which is a difference between a rigidity of an upper part of an opposing bottom wall part, which is a portion of the bottom wall that opposes the sensor apparatus, and a rigidity of a lower part of the opposing bottom wall part.

7. The vehicle structure according to claim 6, wherein
the second vehicle body structural member is provided on a downside relative to the first vehicle body structural member,
the containing part has a lower wall extending from a lower end of the opposing bottom wall part to an outer side of the vehicle with respect to the vehicle front-rear direction,
a vehicle body coupling part to be coupled to the second vehicle body structural member is set on the lower wall,
a connection port to which an electrical wiring is connected, is provided on a surface of the sensor apparatus on the opposing bottom wall part side, and
a portion of the opposing bottom wall part that corresponds to at least the connection port is open in the vehicle front-rear direction.

8. The vehicle structure according to claim 7, wherein a sensor insertion port through which the sensor apparatus can be inserted from one side of the containing part in the vehicle width direction to the inside of the containing part, is open in the reinforcing member.

9. The vehicle structure according to claim 2, wherein
the containing part has a bottom wall which forms a bottom of a recess with respect to the vehicle front-rear direction in the containing part, and
the difference in rigidity includes a difference in rigidity of the bottom wall which is a difference between a rigidity of an upper part of an opposing bottom wall part, which is a portion of the bottom wall that opposes the sensor apparatus, and a rigidity of a lower part of the opposing bottom wall part.
